# EUROPÄISCHE PATENTSCHRIFT

(11) **EP 1 190 547 B1**
(45) Veröffentlichungstag und Bekanntmachung des Hinweises auf die Patenterteilung: **29.03.2006**
(21) Anmeldenummer: 00943897.9
(22) Anmeldetag: 26.06.2000
(51) Int. Cl.: H04L 29/06

(54) **VEREINFACHTE IMPLEMENTATION VON PROTOKOLLMASCHINEN FÜR PROTOKOLLE MIT SCHICHTENSTRUKTUR**
SIMPLIFIED IMPLEMENTATION OF PROTOCOL MACHINES FOR PROTOCOLS WITH A STRATIFIED STRUCTURE
MISE EN OEUVRE SIMPLIFIEE DE MACHINES PROTOCOLES POUR PROTOCOLES A STRUCTURE EN COUCHES

(30) Priorität: 25.06.1999 DE 19929170
(43) Veröffentlichungstag der Anmeldung: 27.03.2002
(73) Patentinhaber: SIEMENS AKTIENGESELLSCHAFT, 80333 München (DE)
(72) Erfinder: SCHWARZBAUER, Hanns, Jürgen, D-82194 Gröbenzell (DE); TÜXEN, Michael, D-81479 München (DE)
(86) Internationale Anmeldenummer: PCT/EP2000/005918
(87) Internationale Veröffentlichungsnummer: WO 2001/001653

(56) Entgegenhaltungen:
- US-A- 4 703 475

## Beschreibung

Die Erfindung betrifft eine Protokollmaschine, die zur Behandlung von Nachrichten ein Protokoll benutzt, das die Funktionalität für eine vollständige und sequenzgesicherte Übertragung von Nachrichten umfaßt, wobei das Protokoll bezüglich der vollständigen und sequenzgesicherten Übertragung eine Schichtenstruktur aufweist.

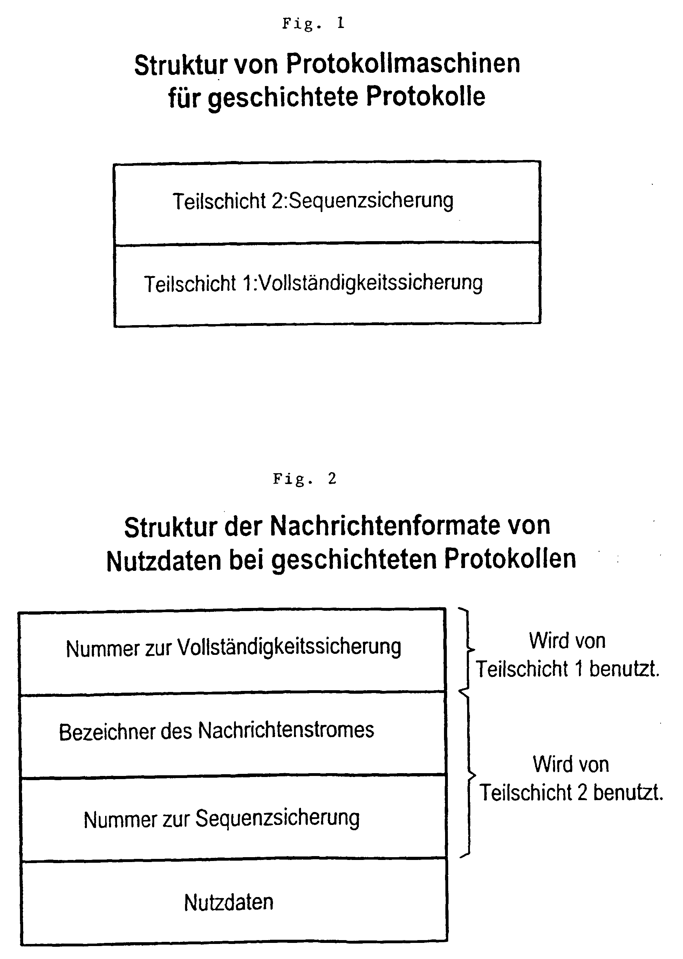

Viele Kommunikationsprotokolle ermöglichen die gesicherte, das heißt vollständige und sequenzgesicherte, Übertragung. Dabei bedeutet vollständige Übertragung, daß alle gesendeten Nachrichten empfangen werden. Hierbei ist die Reihenfolge des Empfangens unwichtig. Ferner bedeutet sequenzgesicherte Übertragung, daß die Nachrichten in der Reihenfolge empfangen werden, wie sie gesendet wurden. Dabei ist Nachrichtenverlust zulässig. Es ist nun vorteilhaft, ein Protokoll, das vollständige und sequenzgesicherte Übertragung garantiert, in zwei Teilschichten zu trennen: die eine Teilschicht realisiert die vollständige Übertragung; eine darüberliegende Teilschicht realisiert dann auf der Basis der vollständigen Übertragung die sequenzgesicherte Übertragung. Diese Struktur ist in Abbildung 1 dargestellt.

Entsprechend der Struktur der Protokollmaschinen sind auch die Nachrichten, die Nutzdaten tragen, strukturiert. Diese Struktur ist in Abbildung 2 dargestellt. Für die Teilschicht 1, die die vollständige Übertragung bereitstellt, ist in dem Nachrichtenformat eine Sequenznummer vorhanden. Um das Head of Line Blocking Problem zu lösen, geht man bei Protokollen mit Schichtenstruktur von mehreren Nachrichtenströmen aus, die sich gegenseitig nicht beeinflussen. Um die Zugehörigkeit zu einem Nachrichtenstrom zu kennzeichnen, enthält jede Nachricht einen Bezeichner des Nachrichtenstroms zu dem die Nachricht gehört. Schließlich enthält jede Nachricht noch eine weitere Nummer zur Sequenzsicherung innerhalb eines Nachrichtenstroms. Diese beiden Daten nutzt die Teilschicht 2, um die Nutzdaten in der richtigen Reihenfolge an den Benutzer des Protokolls zu übergeben. Ferner gibt es einen Nachrichtenstrom, der insofern ein Sonderrolle spielt, daß in ihm die Nachrichten nicht sequenzgesichert übertragen werden, das heißt, daß die Teilschicht 2 ihn nicht bearbeitet. Beispiele dieser Struktur sind z.B. MDTP, welches zur Zeit bei der IETF standardisiert wird, und MSSCOP (wird in Zukunft als SSCOPMCE bezeichnet), welches zur Zeit bei der ITU standardisiert wird. Ein weiteres Beispiel einer solchen Struktur findet sich in der US Patentschrift 4,703,475.

Nun gibt es aber Anwendungsfälle, bei denen man nur vollständige Übertragung braucht. Dazu könnte man Protokolle entwickeln, die genau dies leisten. Dies wird aber in der Praxis nicht gemacht, sondern man benutzt schon vorhandene Protokolle zur gesicherten Übertragung. Dadurch leisten die verwendeten Protokollmaschinen mehr als erforderlich ist. Es ist daher vorteilhaft, vereinfachte Versionen von Protokollmaschinen zu implementieren, die nur vollständige Übertragung garantieren und dennoch protokollkonform sind. Damit könnten sie mit Protokollmaschinen kommunizieren, die das gesamte Protokoll implementieren.

Bisher verwendet man meistens etablierte Protokolle für die gesicherte Übertragung. Eventuell kommen auch spezielle Protokolle zum Einsatz, die nur vollständige Übertragung ermöglichen.

Der wesentliche Aspekt der vorliegenden Erfindung ist darin zu sehen, daß die Protokollmaschine für die Behandlung der Nachrichten nur die Funktionalität der vollständigen Übertragung des genannten Protokolls protokollkonform benutzt. Die hier angegebene Lösung erlaubt es, die Implementation von Protokollmaschinen für Protokolle mit Schichtenstruktur wesentlich zu vereinfachen, wenn man als Funktionalität des Protokolls nur die vollständige Übertragung benötigt. Dies bedeutet nicht nur, daß die Implementation aus weniger Zeilen Quellcode besteht, sondern auch, daß wesentlich weniger Ressourcen (Speicherplatz, CPU-Leistung) zur Laufzeit benötigt werden. Es wird gezeigt, daß man sogar eine Implementation so realisieren kann, daß sie mit Protokollmaschinen, die die volle Funktionalität des Protokolls benutzen, problemlos zusammenarbeiten kann. Dazu beschränkt man die Funktionalität der Protokollmaschine derart, daß keine Nachrichtenströme außer dem, der die Sonderrolle einnimmt, verwendet werden können. Dazu ist es jedoch erforderlich, daß das Protokoll die erforderlichen Elemente zur Zurückweisung unerwünschter Nachrichten enthält. Dies ist bei MDTP und MSSCOP gegeben.

Eine Besonderheit der Erfindung liegt darin, zu erkennen, daß man zur vollständigen Übertragung von Informationen Protokolle mit Schichtenstruktur nutzen kann, die eigentlich eine gesicherte Übertragung garantieren, ohne daß man die für die Sequenzsicherung nötige Funktionalität in den Protokollmaschinen implementieren muß.

Als Ausführungsbeispiel soll hier eine vereinfachte Implementation einer Protokollmaschine für das Protokoll MDTP, wie es zur Zeit bei der IETF in der Version 5 diskutiert wird, gegeben werden. Allerdings wird hier auch schon die Möglichkeit der Ablehnung einer Streamöffnung (Stream Initition NAK) benutzt, die erst in der Version 6 des Protokolls enthalten sein wird. Ferner wird vorausgesetzt, daß der Stream 0, ein Stream der eine Sonderrolle besitzt, dahingehend modifiziert wird, daß alle Dataparts mit Stream Identifier 0 die Sequence Number 0 tragen. Dies bedeutet, daß im Stream 0 keine sequenzgesicherte Übertragung möglich ist.

Von diesen Annahmen ausgehend, wird nun beschrieben, wie eine vereinfachte Implementation im Verhältnis zu einer vollständigen Implementation aussieht. Eine vollständige Referenzimplementation von MDTP wird in Kürze zur Verfügung stehen.

Zunächst sei das Verhalten bei der Bearbeitung von empfangenen Controlparts (Nachrichten-Bestandteile zum Streammanagement) beschrieben:

Man behandelt alle Controlparts, bis auf die Stream Initiation Nachricht, wie bei der vollen Implementation. Auf eine Stream Initiation antwortet die vereinfachte Implementation mit dem Senden einer entsprechenden Stream Initition Nak. Alle anderen Nachrichten zum Streammanagement (Stream Initiation Ack, Stream Termination, Stream Termination Ack) werden protokollkonform verworfen.

Das Verhalten bei der Bearbeitung von Dataparts unterscheidet sich nicht vom Standard:
Unter den hier gegebenen Umständen heißt das, daß man Dataparts verwirft, deren Stream Identifier ungleich 0 ist oder deren Sequence Number ungleich 0 ist.

Die Unterschiede bei der Codierung der Protokollmaschinen sind im wesentlichen die folgenden:
Bei der vereinfachten Implementation ist die Behandlung der Streammanagementnachrichten trivial: Man schickt entweder eine Nachricht aus (Stream Initition Nak) oder verwirft die empfangene Nachricht. Daher spart man hier im wesentlichen die Codierung der Behandlung dieser Nachrichten sowie vollständig die Überwachung der Übertragung dieser Nachrichten. Ferner braucht man denjenigen Code nicht zu implementieren, der für die Sequenzsicherung innerhalb eines Streams zuständig ist. Weiterhin spart man sich den kompletten Empfangspuffer, der für die Sequenzsicherung benötigt wird und eventuell sehr groß sein muß, da die Größe der Dataparts nur durch die Größe der UPD-Datagramme (ca. 64 KB) beschränkt ist. Damit spart man bei der vereinfachten Implementation einen Teil des Codes und den wesentlichen Teil des für die Implementation benötigten Speichers.

## Patentansprüche

1. Protokollmaschine, die derart ausgestaltet ist, daß sie die zur Behandlung von Nachrichten ein Protokoll benutzt, das die Funktionalität für eine vollständige und sequenzgesicherte Übertragung von Nachrichten umfaßt, wobei das Protokoll bezüglich der vollständigen und sequenzgesicherten Übertragung eine Schichtenstruktur aufweist,
**dadurch gekennzeichnet, daß**
die Protokollmaschine, die derart ausgestaltet ist, daß sie für die Behandlung der Nachrichten nur die Funktionalität der vollständigen Übertragung des genannten Protokolls protokollkonform benutzt.

2. Protokollmaschine nach Anspruch 1,
**dadurch gekennzeichnet, daß**
die Funktionalität der Protokollmaschine derart beschränkt ist, daß zur Übertragung von Nachrichten mithilfe des Protokolls nur derjenige Nachrichtenstrom, in dem die Nachrichten nicht sequenzgesichert übertragen werden, verwendet werden kann.

3. Protokollmaschine nach Anspruch 1 oder 2,
**dadurch gekennzeichnet, daß**
es sich bei dem genannten Protokoll um das MDTP handelt.

## Claims

1. Protocol machine which is configured such that it uses for the processing of messages a protocol which comprises the functions for complete and sequence-protected transmission of messages, the protocol exhibiting a layered structure with respect to the complete and sequence-protected transmission, **characterized in that** the protocol machine is configured such that, for processing the messages, it uses only the functions of the complete transmission of said protocol in conformance with the protocol.

2. Protocol machine according to Claim 1, **characterized in that** the functions of the protocol machine are restricted in such a manner that only the message stream in which the messages are not transmitted sequence-protected can be used for transmitting messages with the aid of the protocol.

3. Protocol machine according to Claim 1 or 2, **characterized in that** said protocol is the MDTP.

## Revendications

1. Machine protocole qui est exécutée de telle manière qu'elle utilise un protocole pour le traitement de messages, ce protocole comprenant la fonctionnalité pour une transmission complète et à séquence assurée de messages, le protocole présentant une structure en couches en ce qui concerne la transmission complète et à séquence assurée,
**caractérisée en ce que**
la machine protocole est exécutée de telle manière qu'elle utilise seulement la fonctionnalité de la transmission complète du dit protocole, de manière conforme au protocole, pour le traitement des messages.

2. Machine protocole selon la revendication 1,
**caractérisée en ce que**
la fonctionnalité de la machine protocole est limitée de telle manière que seulement le flux de messages, dans lequel les messages sont transmis en n'étant pas à séquence assurée, peut être utilisé pour la transmission de messages à l'aide du protocole.

3. Machine protocole selon la revendication 1 ou 2,
**caractérisée en ce que**
le protocole mentionné est le protocole MDTP.
